## Europäisches Patentamt

## European Patent Office

## Office européen des brevets

(19)

(11) Veröffentlichungsnummer: **0 076 877**
**B1**

(12) **EUROPÄISCHE PATENTSCHRIFT**

(45) Veröffentlichungstag der Patentschrift:
**12.08.87**

(51) Int. Cl.⁴: **G 01 S 13/94,** G 01 S 7/06

(21) Anmeldenummer: **81108329.4**

(22) Anmeldetag: **14.10.81**

(54) Einrichtung zur Darstellung eines Geländeausschnitts an Bord von Fahrzeugen, insbesondere Luftfahrzeugen.

(43) Veröffentlichungstag der Anmeldung:
**20.04.83 Patentblatt 83/16**

(45) Bekanntmachung des Hinweises auf die Patenterteilung:
**12.08.87 Patentblatt 87/33**

(84) Benannte Vertragsstaaten:
**BE CH FR GB IT LI NL**

(56) Entgegenhaltungen:
**DE-B-2 543 373**
**US-A-3 618 008**
**US-A-4 066 590**

**McGRAW-HILL KOGAKUSHA, LTD., 1980, Tokyo, JP. M.I. SHOLNIK "Introduction to radar systems"**

(73) Patentinhaber: **Siemens Aktiengesellschaft Berlin und München, Wittelsbacherplatz 2, D-8000 München 2 (DE)**

(72) Erfinder: **von Pieverling, Klaus, Dr.Ing., Remigerstrasse 1, D-8190 Wolfratshausen (DE)**

EP 0 076 877 B1

**0 076 877**

**Beschreibung**

An Bord von Fahrzeugen, insbesondere Luftfahrzeugen, besteht vielfach das Bedürfnis, zur Orientierung bei der Bewegung gegenüber dem Erdboden Geländeausschnitte unabhängig von einer optischen Sichtmöglichkeit mit den Mitteln der Radartechnik sichtbar zu machen. Dabei genügt oftmals nicht eine landkartenähnliche Darstellung, wie man sie üblicherweise mit Hilfe von Rundsichtradareinrichtungen hoher Entfernungsauflösunig mit Antennen hoher azimutaler Bündelung gewinnt; vielmehr wird eine perspektivische Darstellung des Geländes unter Darstellung der Höhe und ggf. auch Neigung des Horizonts gewünscht sein, um einem Beobachter in ähnlicher Weise wie bei direkter optischer Sicht eine Information über die Umgebung des (Luft-) Fahrzeugs und dessen Bewegung zu ermöglichen und ihm ggf. eine Hinderniswarnung zu geben.

Zu einer solchen perspektivischen Darstellung eines Geländeausschnittes ist es (aus DE-PS 25 43 373) bekannt, im bzw. am Fahrzeug, insbesondere Luftfahrzeug, eine ihre Strahlung im Azimut scharf bündelnde, einen größeren Elevationswinkelbereich überdeckende Balkenantenne (beispielsweise mit einer Azimutbündelung von ca. 0,5° und einer Elevationsbündelung von ca. 60°) vorzusehen, die durch Schwenkung im Azimut den zu überschauenden Geländeabschnitt azimutal zeitlich nacheinander abtastet, wobei das Gelände bei jedem Azimutwinkel aus dem durch das Vertikaldiagramm beleuchteten Winkelbereich ein Gemisch von Echosignalen sowohl unterschiedlicher, jeweils der Entfernung des jeweils reflektierenden Geländeelements proportionaler Laufzeit als auch unterschiedlicher, der Beziehung $f_d = f_{dmax\alpha} \cdot \cos\varepsilon = (2v_{H\alpha}/\lambda) \cdot \cos\varepsilon$ folgender Dopplerfrequenz $f_d$ liefert, worin $v_{H\alpha}$ die (Luft-)Fahrzeuggeschwindigkeit in Richtung des Azimutschnittes, $\lambda$ die Radarwellenlänge und $\varepsilon$ den - auf die azimutale Geschwindigkeitskomponente (im Azimutschnitt wirksamer Geschwindigkeitsvektor) bezogenen - Aspektwinkel bedeutet, unter dem das betreffende Geländeelement erfaßt wird;

für die vertikale Bilddarstellung eines jeden Azimutschnittes werden dann die in aufeinanderfolgenden Zeitfenstern (Entfernungstore) und damit aus aufeinanderfolgenden Entfernungsbereichen (Entfernungstorbereiche) jeweils empfangenen Echosignale nach ihrer Dopplerfrequenz analysiert,

und zur Darstellung auf dem Bildschirm wird der Lichtpunkt proportional zum jeweiligen Aspektwinkel $\varepsilon$, d.h. nach Maßgabe der Größe $\varepsilon = \text{arc cos } (f_d/f_{dmax\alpha})$, vertikal ausgelenkt, so daß jeweils beim Eintreffen eines Echos unter einem bestimmten Aspektwinkel $\varepsilon$ der Lichtpunkt eine dem Aspektwinkel $\varepsilon$ proportionale Ablenkung erreicht hat, wobei eine übliche zeit- und damit entfernungsabhängige Verstärkungsregelung des Echosignals vorgesehen ist, so daß die Bildpunkthelligkeit unabhängig von der Entfernung des jeweiligen Reflexionspunktes ist.

Durch Nebeneinanderreihen der einzelnen Azimutschnitte auf dem Bildschirm läßt sich so ein perspektivisches Geländebild erzeugen, wobei als Besonderheit zu beachten ist, daß die Aspektwinkeldarstellung stets auf die azimutale Bewegungskomponente des (Luft-) Fahrzeugs gegenüber dem Erdboden - und nicht auf die (Luft-)Fahrzeugachse - bezogen ist.

Wie sich aus der oben angegebenen Beziehung zwischen Aspektwinkel $\varepsilon$ und Dopplerfrequenz $f_d$ ergibt, ist zur Bestimmung des jeweiligen Aspektwinkels aus der jeweiligen Dopplerfrequenz die Kenntnis einer Bezugsfrequenz, nämlich der azimutal maximalen Dopplerfrequenz $f_{dmax\alpha}$ Voraussetzung, wobei Meßgenauigkeit und Winkelauflösung des Aspektwinkels von der Genauigkeit in der Bestimmung dieser Bezugsfrequenz abhängen und was ggf. an Bord des (Luft-)Fahrzeugs einen entsprechenden Sensor, z. B. ein Dopplernavigationsradargerät, erfordert. Der Erfindung liegt nun die Aufgabe zugrunde, in dieser Hinsicht eine hohe Genauigkeit zu gewährleisten, ohne daß dazu andere Einrichtungen, wie z. B. ein Dopplernavigationsradargerät, in Anspruch genommen werden müßten.

Die Erfindung betrifft eine Einrichtung zur Darstellung eines Geländeausschnitts an Bord von Fahrzeugen, insbesondere Luftfahrzeugen, bei deren Bewegung gegenüber dem Erdboden, in der eine ihre Strahlung im Azimut scharf bündelnde, einen größeren Elevationswinkelbereich überdeckende Balkenantenne durch Schwenkung im Azimut den zu überschauenden Geländeabschnitt azimutal zeitlich nacheinander abtastet, wobei das Gelände bei jedem Azimutwinkel aus dem durch das Vertikaldiagramm beleuchteten Winkelbereich ein Gemisch von Echosignalen sowohl unterschiedlicher, jeweils der Entfernung des jeweils reflektierenden Geländepunktes proportionaler Laufzeit als auch unterschiedlicher, der Beziehung $f_d - f_{dmax\alpha} \cdot \cos\varepsilon$ $(2v_{H\alpha}/\lambda) \cdot \cos\varepsilon$ folgender Dopplerfrequenz $f_d$ liefert, worin $v_{H\alpha}$ die (Luft-)Fahrzeuggeschwindigkeit in Richtung des Azimutschnittes, $\lambda$ die Radarwellenlänge und $\varepsilon$ den (auf den azimutalen Geschwindigkeitsvektor bezogenen) Aspektwinkel bedeutet, unter dem der betreffende Geländepunkt erfaßt wird, und in der bei einer vertikalen Bilddarstellung eines jeden von jeweils mehreren Radarwellenzügen beleuchteten Azimutschnittes die in aufeinanderfolgenden Zeitfenstern (Entfernungstoren) und damit aus aufeinanderfolgenden Entfernungsbereichen (Entfernungstorbereichen) jeweils empfangenen Echosignale nach ihrer Dopplerfrequenz analysiert werden

und zur Darstellung auf dem Bildschirm der Lichtpunkt proportional zum jeweiligen Aspektwinkel $\varepsilon$ vertikal ausgelenkt werden kann, so daß auf ein unter einem bestimmten Aspektwinkel $\varepsilon$ und mit einer bestimmten Amplitude empfangenes Echo hin der dieses Echo mit einer entsprechenden Helligkeit wiedergebende Bildpunkt eine dem Aspektwinkel proportionale Ablenkung hat.

Diese Einrichtung ist erfindungsgemäß dadurch gekennzeichnet, daß die Balkenantenne aus zwei zueinander parallel angeordneten, eine Peilantenne bildenden Empfangsantennenstäben besteht, deren Abstand einige, z. B. fünf Wellenlängen beträgt,

daß jeweils der Gangunterschied (Phasendifferenz) zwischen in den beiden Empfangsantennenstäben von

2

ein und demselben Geländeelement empfangenen Echosignalen im Wege einer entfernungstorindividuellen Phasenwinkelsubtraktion ermittelt und gespeichert wird, daß ebenso entfernungstorindividuell eine Dopplerfrequenzbestimmung vorgenommen wird und

daß aus den Gangunterschieden und Dopplerfrequenzen zumindest zweier Entfernungstorbereiche die Bezugsfrequenz

$$f_{dmax\alpha} = \frac{\sqrt{f^2_{di} + f^2_{dj} - 2.f_{di}.f_{dj}.\cos((G_i-G_j)/s)}}{\sin((G_i - G_j)/s)}$$

bestimmt wird, worin $f_{di}$ und $f_{dj}$ die in solchen Entfernungstoren ermittelten Dopplerfrequenzen, $G_i$ und $G_j$ den in den betreffenden Entfernungstoren ermittelten Gangunterschiede und s die vom jeweiligen - auf die Normale auf der Antennenebene bezogenen - Aspektwinkel $\varepsilon$ * abhängige Gangunterschiedssteilheit bedeuten,

und daß ferner zur Geländedarstellung auf dem Radarbildschirm zumindest in einem Bereich mittlerer Aspektwinkel, d.h. etwa von 15 bis 75°, der Lichtpunkt zumindest angenähert proportional zum zeitlichen Verlauf der Größe

$$\varepsilon_{||} = \text{arc cos} \frac{f_d . \sin((G_i - G_j)/s)}{\sqrt{f^2_{di} + f^2_{dj} - 2.f_{di} .f_{dj}.\cos((G_i-G_j)/s)}}$$

vertikal ausgelenkt wird, worin $f_d$ die gerade ermittelte Dopplerfrequenz bedeutet.

Die Erfindung, die bei der Ermittlung der Bezugsfrequenz

$$f_{dmax\alpha} = \frac{\sqrt{f^2_{di} + f^2_{dj} - 2.f_{di}. 2.f_{dj}.\cos((G_i-G_j)/s)}}{\sin((G_i - G_j)/s)}$$

bei wenigstens grober Richtungsübereinstimmung von (Luft-)Fahrzeug-Längsachse und Antennennormale mit Geschwindigkeitskomponente mit in der Regel zu vernachlässigendem Fehler $\varepsilon_i - \varepsilon_j = \varepsilon^*_i - \varepsilon^*_j$ setzt, bringt den Vorteil einer hohen Genauigkeit in der - ohne Inanspruchnahme anderer Einrichtungen ermöglichten - Bestimmung der azimutal maximalen Dopplerfrequenz mit sich und ermöglicht damit zumindest in einem Bereich mittlerer Aspektwinkel eine entsprechend hohe Meßgenauigkeit und Winkelauflösung des Aspektwinkels und eine entsprechend verzerrungsfreie Geländedarstellung.

Darüber hinaus ist auch eine der hohen Genauigkeit in der Bestimmung der azimutal maximalen Dopplerfrequenz entsprechend genaue Bestimmung des jeweiligen azimutalen Geschwindigkeitsvektors möglich, indem in Weiterbildung der Erfindung die aus den in den betrachteten Entfernungstoren ermittelten Gangunterschieden und Dopplerfrequenzen bestimmte Bezugsfrequenz

$$f_{dmax\alpha} = \frac{\sqrt{f^2_{di} + f^2_{dj} - 2.f_{di}.f_{dj}.\cos((G_i-G_J)/s)}}{\sin((G_i - G_j)/s)}$$

zur Bestimmung des azimutalen Geschwindigkeitsvektors $V_{H\alpha} = \lambda . f_{dmax\alpha}/2$ ausgenutzt wird; in weiterer Ausbildung der Erfindung kann auch die aus den in den beiden Entfernungstoren ermittelten Gangunterschieden und Dopplerfrequenzen bestimmte Bezugsfrequenz

$$f_{dmax\alpha} = \frac{\sqrt{f^2_{di} + f^2_{dj} - 2.f_{di}.f_{dj}.\cos((G_i-G_j))}}{\sin((G_i - G_j)/s)}$$

jeweils assoziativ zum jeweiligen Azimutwinkel $\alpha$, bezogen auf die (Luft-)Fahrzeuglängsachse, gespeichert werden und die während eines Azimutschwenks auftretende höchste Bezugsfrequenz zur Bestimmung des horizontalen Geschwindigkeitsvektors

$$V_{H\alpha} = \lambda . f_{dmax\alpha}/2$$

ausgenutzt werden, womit auch hier eine der hohen Genauigkeit in der Bestimmung der azimutal maximalen Dopplerfrequenz entsprechende Genauigkeit gegeben ist.

Die Bezugsfrequenz

$$f_{dmax\alpha} = \frac{\sqrt{f^2_{di} + f^2_{dj} - 2.f_{di}.f_{dj}.\cos((G_i-G_j)/s)}}{\sin((G_i-G_j)/s)}$$

wird zweckmäßigerweise durch Bestimmung der Gangunterschiede und Dopplerfrequenzen zweier etwa einer Aspektwinkeldifferenz in der Größenordnung von 30 bis 60° entsprechend weiter auseinanderliegender Entfernungstore ermittelt, womit ein Kompromiß zwischen einer Forderung nach (zur Genauigkeitserhöhung) möglichst stark voneinander abweichenden Gangunterschieden und einer Forderung nach einem möglichst linearen Zusammenhang zwischen Gangunterschied und Aspektwinkel eingegangen wird.

Es sei an dieser Stelle bemerkt, daß die Bestimmung der die eigentliche Fahrzeugnavigation erleichternden Geschwindigkeitsvektoren nach Maßgabe der aus den in wenigstens zwei ausgewählten Entfernungstoren ermittelten Gangunterschieden und Dopplerfrequenzen bestimmten Bezugsfrequen ebenso wie die Bestimmung der Bezugsfrequenz selbst ggf. auch unabhängig von einer Geländedarstellung auf dem Radarbildschirm und damit unabhängig von einer Vertikalauslenkung eines entsprechenden Lichtpunktes proportional zum zeitlichen Verlauf der im vorstehenden angegebenen Größe $\varepsilon_{||}$ vorgenommen werden kann,

so daß den diesbezüglichen Merkmalen der Erfindung also auch selbständige Bedeutung zukommt. Zweckmäßigerweise wird die Bestimmung des Aspektwinkels

$$\varepsilon_{||} = \arc \cos . \frac{f_d.\sin((G_i - G_j)/s)}{\sqrt{f^2_{di} + f^2_{dj} - 2.f_{di}.f_{dj}.\cos((G_i-G_j)/s)}}$$

ggf. die Vertikalauslenkung des Lichtpunktes auf dem Radarbildschirm nach Maßgabe der Größe $\varepsilon_{||}$ nur bis zu einem unteren Grenz-Aspektwinkel in der Größenordnung von etwa 15 bis 20° vorgenommen, da - aufgrund eines (gleichbleibende Meßgenauigkeit für die Dopplerfrequenz $f_d$ vorausgesetzt) mit einer Funktion sin $^{-1}\varepsilon$ verlaufenden Meßfehlers - mit kleiner werdendem Aspektwinkel $\varepsilon$ die Meßgenauigkeit, d.h. die Übereinstimmung des tatsächlichen Aspektwinkels eines Geländepunktes mit der Darstellung auf dem Radarbildschirm, stark abnimmt, so daß es zu einer zunehmenden Bildverzerrung kommt; zugleich sinkt mit kleiner werdendem Aspektwinkel $\varepsilon$ auch die Meßauflösung und damit die Bildschärfe. In weiterer Ausgestaltung der Erfindung wird dann zweckmäßigerweise in einem an einen unteren Grenz-Aspektwinkel anschließenden Bereich kleinerer Aspektwinkel der Lichtpunkt in jeder Radarpulsperiode zumindest angenähert proportional zum zeitlichen Verlauf der Größe

$$\varepsilon_I = \varepsilon_{||/I} - (G - G_{||/I})/S$$

vertikalausgelenkt, worin G der gerade ermittelte Gangunterschied, $\varepsilon_{||/I}$ ein Bezugsaspektwinkel des mittleren Aspektwinkelbereiches (II) und $G_{||/I}$ der dabei gegebene Gangunterschied ist und S die im Bereich kleiner Aspektwinkel maßgebende Gangsunderschiedssteilheit bedeutet; der Bezugsaspektwinkel $\varepsilon_{||/I}$ kann dabei auch durch den genannten unteren Grenz-Aspektwinkel gegeben sein.

Die Erfindung macht sich dabei den im wesentlichen einer Sinus-Funktion folgenden, im Bereich kleiner Aspektwinkel mit beachtlicher Steilheit angenähert linear verlaufenden Zusammenhang zwischen Gangunterschied und Aspektwnkel $\varepsilon^*$ im Zusammenwirken mit dem Umstand, daß bei kleinen Aspektwinkeln, insbesondere im flachen Gelände, bei größeren Flughöhen und bei hoher Radarentfernungsauflösung, in der Regel ein eindeutiger, monotoner Zusammenhang zwischen Aspektwinkel und Geländepunktentfernung gegeben ist, so daß in jedem Zeitfenster (Entfernungstor) praktisch nur ein Echosignal - genauer betrachtet ein (durch einen gleichmäßig umlaufenden Vektor mit überlagerter Amplituden- und Phasenschwebung darstellbares) schmales Frequenzband - empfanzen wird, dadurch zunutze, daß Änderungen des Aspektwinkels auf Änderungen der Zielentfernung rückgeführt und aus der Differenz des Gangunterschiedes in verschiedenen Entfernungstoren abgeleitet werden.

Zweckmäßig ist es auch, die Peilantennenebene etwa in der Größenordnung von 10° gegen die (Luft-)Fahrzeugvertikalachse in Richtung der (Luft-)Fahrzeuglängsachse zu neigen, womit die für die Orientierung maßgebende Umgebung des (Luft-)Fahrzeuges eine günstigere Ausleuchtung erfährt; in weiterer Ausgestaltung der Erfindung kann die Feilantenne einen zwischen zwei reinen Empfangsantennenstäben liegenden gesonderten Sendeantennenstab aufweisen, was mit einer entsprechend erhöhten Symmetrie der Peilantenne verbunden ist und im übrigen das Umschalten eines der beiden Antennenstäbe zwischen Sende- und Empfangsbetrieb erübrigt.

Anhand der Zeichnungen sei die Erfindung noch näher erläutert. Dabei zeigt

Fig. 1 eine Geländedarstellung mit verschiedenen, von einem Luftfahrzeug beleuchteten Aspektwinkelbereichen;

Fig. 1a verdeutlicht Einzelheiten einer am Luftfahrzeug befindlichen Peilantenne.

Fig. 2 zeigt eine Diskriminatorkurve, die den Zusammenhang zwischen Gangunterschied und Aspektwinkel erkennen läßt; in

Fig. 3 sind schaltungstechnische Einzelheiten eines Ausführungsbeispiels für eine Einrichtung gemäß der Erfindung dargestellt.

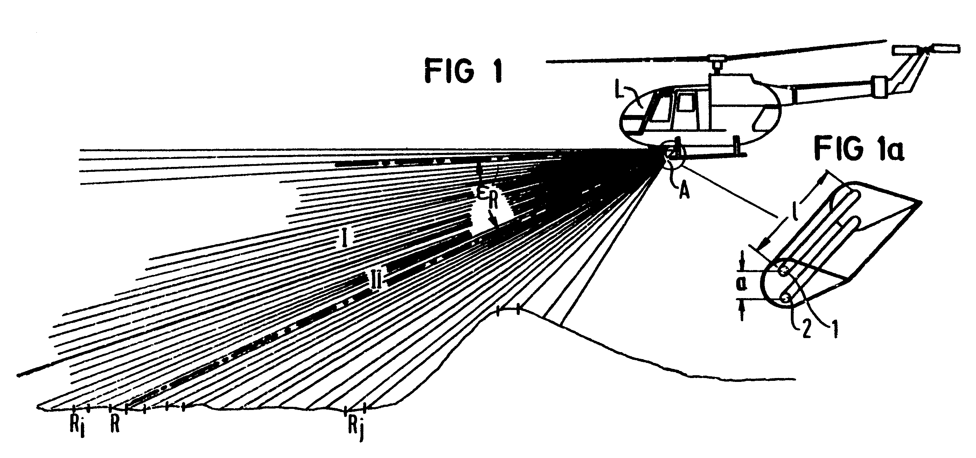

In der Zeichnung Fig. 1 ist ein Luftfahrzeug L dargestellt, das mit einer Einrichtung gemäß der Erfindung ausgerüstet sein möge. Teil dieser Einrichtung ist eine am Luftfahrzeug L vorgesehene Antenne A, die im Azimut eine starke Bündelung aufweist, im Elevationsbereich (in Fig. 1 in der Zeichenebene) dagegen einen größeren Winkelbereich überdeckt. Die azimutal in einem Bereich von z. B. $\pm + 20°$ mechanisch oder elektronisch schwenkbare Antenne A weist, wie dies in Fig. 1a angedeutet ist, wenigstens zwei in Antennenmittelstellung parallel zur Luftfahrzeug-Querachse liegende Empfangsantennenbalken 1, 2 auf, die in einem Abstand von wenigen Wellenlängen, beispielsweise in einem Abstand 5.$\lambda$, d.i. bei Zugrundelegung einer Wellenlänge $\lambda = 8$ mm in einem Abstand a = 40 mm, parallel übereinander angeordnet sind. Die Antenne A besitzt bei einer Betriebsfrequenz von im Beispiel 40 GHz und einer Länge 1 von 1,5 m eine azimutale Bündelung auf 0,5° und beleuchtet in der Vertikalebene einen Elevationswinkelbereich von beispielsweise 60°, der in Fig. 1 die beiden Teilbereiche I und II überdecken möge. Die Antennenebene ist dabei zur besseren Ausleuchtung des unterhalb der Luftfahrzeug-Längsachse liegenden Bereichs zweckmäßigerweise gegenüber der Luftfahrzeug-Hochachse etwas nach unten geneigt, beispielsweise um etwa 10°. Umfaßt die Antenne A, wie in Fig. 1a angedeutet, nur die beiden Antennenstäbe 1 und 2, so wird einer der beiden Antennenstäbe im Pulsbetrieb abwechselnd als Sende- und Empfangsantenne benutzt, der andere als reine Empfangsantenne. Es ist aber auch möglich, daß in Abweichung von der Darstellung in Fig. 1a die Antenne zusätzlich einen zwischen zwei reinen Empfangsantennenstäben 1, 2 liegenden gesonderten Sendeantennenstab aufweist.

Zweckmäßigerweise ist die Peilantenne A aerodynamisch verkleidet, wie dies auch in Fig. 1a angedeutet ist.

Auf jeden von der Peilantenne A ausgesendeten Wellenzug hin liefert das Gelände aus dem durch das Fächerdiagramm beleuchteten Winkelbereich ein Gemisch von Echosignalen sowohl unterschiedlicher, jeweils der Entfernung des jeweils reflektierenden Geländeelementes proportionaler Laufzeit als auch unterschiedlicher Dopplerfrequenz $f_d$, für die die Beziehung $f_d = f_{dmax\alpha} \cdot \cos\varepsilon = (2v_{H\alpha}/\lambda) \cos\varepsilon$ gilt, worin $v_{H\alpha}$ die Luftfahrzeuggeschwindigkeit in Richtung des jeweiligen Azimutschnittes, $\lambda$ die Radarwellenlänge und $\varepsilon$ den (auf den azimutalen Geschwindigkeitsvektor bezogenen) Aspektwinkel bedeutet, unter dem das betreffende Geländeelement erfaßt wird. Ein solcher Aspektwinkel $\varepsilon_R$ ist in Fig. 1 für ein Geländeelement eingezeichnet, das sich in einem Entfernungstorbereich R befindet und dessen Echosignal daher in einem gegenüber der Aussendung des jeweiligen Radarwellenzuges um die Summe 2R/c von Hin- und Rücklaufzeit versetzten Zeitfenster in den Empfangsantennen 1 und 2 auftritt.

Zwischen den in den beiden Antennenstäben 1, 2 von ein und demselben Geländeelement her empfangenen Echosignalen besteht in der Regel eine Phasendifferenz, die hier auch als Gangunterschied G bezeichnet wird und die bekanntlich zur Peilung eines Zieles nach Maßgabe der Beziehung $G = (2\pi \cdot \sin\varepsilon^*)/\lambda$ benutzt werden kann, worin a den Abstand der beiden Empfangsantennen, $\lambda$ die Radarwellenlänge und $\varepsilon^*$ den (auf die Antennen-Hauptrichtung bezogenen) Aspektwinkel bedeuten. In einem mittleren Aspektwinkelbereich II, wie er qualitativ in Fig. 1 angedeutet ist, wird nun für zumindest zwei passend gewählte, zweckmäßigerweise unter einer Aspektwinkeldifferenz in der Größenordnung von 30 bis 60° auseinanderliegende Entfernungstorbereiche, wie sie qualitativ in Fig. 1 mit $R_i$ und $R_j$ angedeutet sind, jeweils der Gangunterschied (Phasendifferenz) zwischen den in den beiden Empfangsantennenstäben 1 und 2 von ein und demselben Geländeelement empfangenen Echosignalen im Wege einer entfernungstorindividuellen Phasenwinkelsubtraktion ermittelt und gespeichert, und gleichzeitig werden die aus den betreffenden Entfernungstorbereichen jeweils empfangenen Echosignale nach ihrer Dopplerfrequenz analysiert. Danach läßt sich dann für den betreffenden Azimutschnitt die als Bezugsfrequenz dienende azimutal maximale Dopplerfrequenz

$$f_{dmax\alpha} = \frac{\sqrt{f^2_{di} + f^2_{dj} - 2.f_{di}.f_{dj}.\cos((G_i\text{-}G_j)/s)}}{\sin((G_i - G_j)/s)}$$

bestimmen. Darin bedeuten $f_{di}$ und $f_{dj}$ die in den zuvor angesprochenen Entfernungstoren ($R_i$, $R_j$) ermittelten Dopplerfrequenzen, $G_i$ und $G_j$ den in den betreffenden Entfernungstoren ermittelten Gangunterschiede und s die vom jeweiligen Aspektwinkel $\varepsilon^*$ abhängige Gangunterschiedssteilheit.

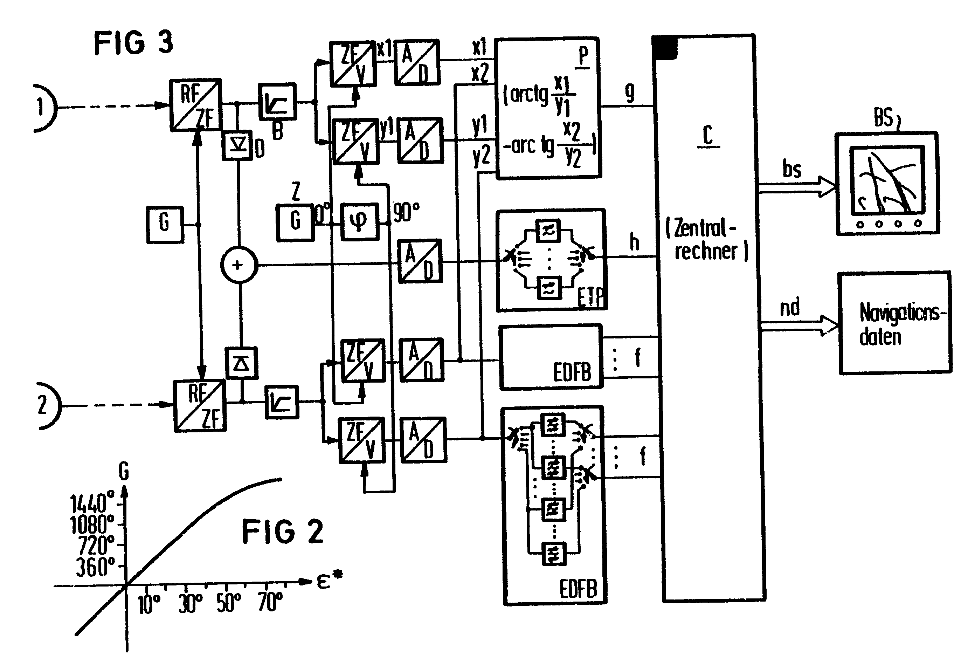

An dieser Stelle sei ein Blick auf die Zeichnung Fig. 2 geworfen, die den im wesentlichen einer Sinusfunktion folgenden Zusammenhang zwischen Gangunterschied G und Aspektwinkel $\varepsilon^*$ (bezogen auf die Luftfahrzeug-Längsachse) verdeutlicht. Man erkennt dabei einen bei nicht zu großen Aspektwinkeln in einem relativ weiten Aspektwinkelbereich angenähert linearen Zusammenhang, wobei die Steilheit im Beispiel den beachtlichen Wert von 31,4 Grad Gangunterschied je Grad Aspektwinkel aufweist.

Die Bestimmung der jeweiligen azimutalen Bezugsfrequenz $f_{dmax\alpha}$ braucht übrigens nicht in jeder Radarpulsperiode erneut durchgeführt zu werden, da keine entsprechend schnellen Änderungen zu erwarten sind; es genügt daher eine Bestimmung der jeweiligen azimutalen Bezugsfrequenz etwa im Sekundenabstand.

Zur Geländedarstellung auf dem Radarbildschirm wird dann zumindest in einem Bereich II mittlerer Aspektwinkel der Lichtpunkt in jeder Radarpulsperiode zumindest angenähert proportional zum zeitlichen Verlauf der Größe

$$\varepsilon_{||} = \text{arc cos} \frac{f_d.\sin((G_i - G_j)/s)}{\sqrt{f^2_{di} + f^2_{dj} - 2.f_{di}.f_{dj}.\cos((G_i\text{-}G_j)/s)}}$$

vertikal ausgelenkt; darin bedeutet $f_d$ die im gerade geöffneten Entfernungstor (R) ermittelte Dopplerfrequenz.

Wie dies schaltungstechnisch geschehen kann, zeigt anhand einer Prinzipschaltung für ein Ausführungsbeispiel einer Einrichtung gemäß der Erfindung die Zeichnung Fig. 3, wobei sich die dortige Darstellung auf den Empfangsteil der Einrichtung beschränkt. Die beiden Empfangsantennenstäbe sind hier - wie in Fig. 1 und Fig. 1a- -wiederum mit 1 und 2 bezeichnet; sie mögen durch eine in Fig. 3 nicht näher dargestellte Schwenkeinrichtung, die in (beispielsweise aus DE-PS 25 43 373) bekannte Art ausgeführt sein kann, mechanisch oder elektronisch azimutal schwenkbar sein, was hier jedoch nicht weiter verfolgt zzu werden braucht, da für das Verständnis der Erfindung lediglich ein Azimutschnitt betrachtet zu werden braucht: Die Vorgänge wiederholen sich für jeden Azimutschnitt entsprechend.

Die in den beiden Empfangsantennen 1, 2 jeweils empfangenen (in Beispiel 40-GHz-) Echowellenzüge werden jeweils in einem im wesentlichen mit einem Mischer und einem Zwischenfrequenzverstärker aufgebauten Zwischenfrequenzumsetzer RF/ZF in die Zwischenfrequenzlage um z. B. 60 MHz umgesetzt.

Die anschließend in einem Begrenzer B begrenzten ZF-Signale werden dann jeweils den beiden mit von einem Zwischenfrequenzgenerator Z direkt bzw. über einen 90°-Phasen-schieber beaufschlagten Demodulatoren ZF/V einer Einseitenband-Video-Demodulatorschaltung zugefürt, die das jeweilige ZF-Signal in die Einseitenbasisbandlage umsetzt, wobei jeweils zwei senkrecht aufeinanderstehende Basisbandsignalkomponenten x, y erhalten werden, die jeweils anschließend in einem Analog/Digital-Umsetzer A/D noch eine Analog/Digital-Umsetzung erfahren.

Aus den beiden Signalkomponenten x und y ergibt sich der Phasenwinkel des jeweiligen Echosignals mit arc tg x/y, so daß in einem kleinen Rechner oder auch mit Hilfe einer in einem nach Maßgabe der jeweiligen Signalkomponenten $x_1$, $y_1$, $x_2$, $y_2$ angesteuerten Speicher gespeicherten Tabelle jeweils der Gangunterschied G zwischen den in den beiden Empfangsantennen 1 und 2 von ein und demselben Geländeelement empfangenen Echosignalen im Wege einer Phasenwinkelsubtraktion mit G = arc tg $x_1/y_1$ - arc tg $x_2/y_2$ bestimmt werden kann und am Ausgang g einer entsprechenden, in Fig. 3 mit P bezeichneten Phasendifferenzschaltung den jeweiligen Gangunterschied anzeigende Signale auftreten. Die Phasenwinkeldifferenz wird dabei sukzessive dadurch entfernungstorindividuell ermittelt, daß die aus aufeinanderfolgenden Entfernungstorbereichen. ..$R_i$,...$R_j$,... R... (vgl. Fig. 1) herrührenden Echowellenzüge jeweils sukzessive die Empfangsantennen 1, 2 erreichen und daher auch getrennt voneinander der Phasenwinkelsubtraktion unterliegen. Die durch die auf der Ausgangsleitung g auftretenden Signale angezeigten Gangunterschiede können dann in einem nachfolgenden zentralen Bordrechner C zunächst einmal gespeichert werden.

Zumindest die Signalkomponenten x, y, die aus den von einem der beiden Empfangsantennenstäbe 1, 2 empfangenen Echosignalen abgeleitet wurden, im Beispiel gemäß Fig.3 die Signalkomponenten $x_2$, $y_2$, werden außerdem mit Hilfe einer entfernungsselektiven Dopplerfilterbank nach der jeweiligen Dopplerfrequenz analysiert. Solche in der Schaltungsanordnung nach Fig. 3 mit EDFB bezeichnete Dopplerfilterbänke sind allgemein bekannt; sie können, wie dies auch in Fig. 3 angedeutet ist, für jedes Entfernungstor eine Mehrzahl eingangsseitig parallelgeschalteter, schmalbandiger (im Prinzip jeweils nur für eine der möglichen Dopplerfrequenzen durchlässiger) Filter enthalten, die ausgangsseitig entfernungstorgerecht mit dopplerfrequenzindividuellen Ausgangsleitungen f verbunden sind. In der Praxis wird man allerdings eine Realisierung mittels eines Digitalfilters (Digital Fast Fourier Transform) vorsehen, wobei der entfernungsselektiven Dopplerfilterbank EDFB dann ein Analog/Digital-Umsetzer vorzuschalten ist, wie dies auch in Fig. 3 dargestellt ist. Die durch die auf den Ausgangsleitungen f auftretenden Signale angezeigten Dopplerfrequenzen werden von dem nachfolgenden zentralen Bordrechner C aufgenommen.

Der zentrale Bordrechner C bestimmt dann aus den von ihm aufgenommenen Informationen über Gangunterschiede $G_i$, $G_j$ und Dopplerfrequenzen $f_{di}$, $f_{dj}$ wenigstens zweier passend gewählter, zweckmäßigerweise - etwa einer Aspektwinkeldifferenz in der Größenordnung von 30 bis 60° entsprechend - weiter auseinanderliegender Entfernungstorbereiche $R_i$, $R_j$ des mittleren Aspektwinkelbereichs II, wie er qualitativ in Fig. 1 angedeutet ist, für den betreffenden Azimutschnitt die als Bezugsfrequenz dienende azimutal maximale D-oppelfrequenz

$$f_{dmax\alpha} = \frac{\sqrt{f^2_{di} + f^2_{dj} - 2.f_{di}.f_{dj}.\cos((G_i-G_j)/s)}}{\sin((G_i - G_j)/s)}$$

worin s die vom jeweiligen Aspektwinkel $\varepsilon^*$ abhängige Gangunterschiedssteilheit bedeutet.

An dieser Stelle sei erneut ein Blick auf die Zeichnung Fig. 2 geworfen, die den im wesentlichen einer Sinusfunktion folgenden Zusammenhang zwischen Gangunterschied G und Aspektwinkel $\varepsilon^*$ (bezogen auf die Luftfahrzeug-Längsachse) verdeutlicht und aus der man erkennt, daß bei nicht zu großen Aspektwinkeln ein in einem relativ weiten Aspektwinkelbereich angenähert linearer Zusammenhang gegeben ist, wobei hier die Steilheit S im Beispiel einen Wert von 31,4 Grad Gangunterschied je Grad Aspektwinkel aufweist.

Für eine Geländedarstellung auf einem vom zentralen Bordrechner C über ein Ausgangsleitungsbündel bs gesteuerten Radarbildschirm BS nutzt der zentrale Rechner dann die vorstehend angegebene Bezugsfrequenz zumindest in einem Bereich II (siehe Fig. 1) mittlerer Aspektwinkel zur Gewinnung eines Vertikalablenksignals für den Lichtpunkt aus, so daß dieser in jeder Radarpulsperiode zumindest angenähert proportional zum zeitlichen Verlauf der Größe

$$\varepsilon_{||} = \text{arc cos } (f_d/f_{dmax\alpha})$$

vertikal ausgelenkt wird. Hierzu können die die einzelnen Dopplerfrequenzen $f_d$ repräsentierenden Signale eine der Funktion arc cos $(f_d/f_{maxd\alpha})$ entsprechende Amplitudengewichtung erhalten und danach in ihrer zeitlichen Reihenfolge zusammengefaßt werden, wie dies im Prinzip (aus DE-PS 25 43 373) bekannt ist und daher hier nicht weiter dargestellt zu werden braucht.

Gleichzeitig kann der zentrale Bordrechner C die aus den in den ausgewählten Entfernungstoren ($R_i$, $R_j$ in Fig. 1) ermittelten Gangunterschieden $G_i$, $G_j$ und Dopplerfrequenzen $f_{di}$, $f_{dj}$ bestimmte Bezugsfrequenz $f_{dmax\alpha}$ auch zur Bestimmung des azimutalen Geschwindigkeitsvektors $v_{H\alpha} = \lambda.f_{dmax\alpha}/2$ ausnutzen, wobei die einzelnen Bezugsfrequenzen $f_{dmax\alpha}$ auch jeweils assoziativ zum jeweiligen Azimutwinkel $\alpha$, bezogen auf den Nullwinkel der Antenne und damit auch bezogen auf die Luftfahrzeug-Längsachse, im Bordrechner C gespeichert werden können und die während eines Azimutschwenks auftretende höchste Bezugsfrequenz zur Bestimmung des horizontalen Geschwindigkeitsvektors

$$v_H = \lambda . f_{dmax}/2$$

ausgenutzt werden kann. In Fig.3 ist dazu angedeutet, daß der zentrale Bordrechner C solche Navigationsdaten über einen entsprechenden Ausgang nd abgibt.

Die Bestimmung des Aspektwinkels

$$\epsilon_{II} = \text{arc cos} \quad \frac{f_d.\sin((G_i-G_j)/s)}{\sqrt{f^2_{di} + f^2_{dj} . 2 \cdot f_{di} . f_{dj} . \cos((G_i-G_j)/s)}}$$

und die Vertikalauslenkung des Bildpunktes auf dem Radarbildschirm BS nach Maßgabe dieser Größe

$$\epsilon_{II} \approx \text{arc cos} (f_d/f_{dmax\alpha})$$

wird, wie oben bereits erwähnt, zweckmäßigerweise nur in einem bis zu einem unteren Grenz-Aspektwinkel in der Größenordnung von etwa 15 bis 20° reichenden mittleren Aspektwinkelbereich vorgenommen, wie er in Fig. 1 mit dem Aspektwinkelbereich II qualitativ angedeutet ist. In einem daran anschließenden Bereich kleinerer Aspektwinkel, wie er in Fig. 1 mit dem Aspektwinkelbereich qualititativ angedeutet ist, empfiehlt es sich dann, daß der zentrale Bordrechner den jeweiligen Aspektwinkel $\epsilon_I$ nach Maßgabe der Beziehung

$$\epsilon_I \approx \epsilon_{II/I} - (G - G_{II/I})/S$$

bestimmt, worin S die oben im Zusammenhang mit Fig. 2 bereits angesprochene, im Bereich I (s.Fig. 1) kleiner Aspektwinkel praktisch konstante Gangunterschiedssteilheit von im Beispiel 31,4 Grad Gangunterschied pro Grad Aspektwinkel ist. Als Bezugsaspektwinkel $\epsilon_{II/I}$ kann im Prinzip irgendein Aspektwinkel des mittleren Aspektwinkelbereichs II, beispielsweise der genannte untere Grenz-Aspektwinkel, gewählt werden; durch eine solche Bezugnahme auf die jeweils eigenständige Messung momentaner Gangunterschiede und Dopplerfrequenzen und damit auf die eigenständige Bestimmung von Aspektwinkeln im mittleren Aspektwinkelbereich II (in Fig. 1) wird ein eindeutiger Anschluß der im Bereich I kleinerer Aspektwinkel vorgenommenen Bestimmung von Aspektwinkeln ($\epsilon_I$) an die im mittleren Aspektwinkelbereich II vorgenommene Bestimmung von Aspektwinkeln ($\epsilon_{II}$) gewährleistet.

In der Schaltungsanordnung nach Fig. 3 werden dazu die im Aspektwinkelbereich I sukzessive (entfernungstorindividuell) auftretenden Gangunterschiede G in der Phasendifferenzschaltung P bestimmt und durch entsprechende, auf der Ausgangsleitung g auftretende Signale dem nachfolgenden zentralen Bordrechner C zugeführt, wo sie dann mit den dort gespeicherten Werten $\epsilon_{II/I}$, $G_{II/I}$ und S entsprechend verknüpft werden. Für eine Geländedarstellung auf dem vom Bordrechner C über das Ausgangsleitungsbündel bs gesteuerten Radarbildschirm BS kann der zentrale Bordrechner C dann ein der Größe des jeweiligen Aspektwinkels $\epsilon_I$ proportionales Vertikalablenksignal bilden und über seine Ausgangsleitungen bs dem Radarsichtgerät BS zuführen.

Zur Steuerung der Helligkeit des Bildpunktes werden in der Schaltungsanordnung nach Fig. 3 die von den beiden Zwischenfrequenzumsetzern RF/ZF abgegebenen ZF-Signale jeweils einer (zum Ausgleich der entfernungsbedingten Echosignaldynamik zweckmäßigerweise logarithmischen) Video-Gleichrichterschaltung D zugeführt; die Ausgangssignale beider Video-Gleichrichter werden zusammengefaßt über eine Leitung h dem zentralen Bordrechner C und weiter über dessen Ausgangsleitungsbündel bs der Helligkeitssteuerung des Bildschirmgeräts BS zugeführt. In der Schaltungsanordnung nach Fig. 3 ist dabei in die Leitung h ein entfernungsselektiver Tiefpaß ETP, d.h. ein Tiefpaß mit Kammfiltereigenschaft, eingefügt, mit dessen Hilfe eine Herabsetzung der Informationsdichte, d.h. eine Reduktion der dem Bordrechner C zugeführten Daten erzielt und damit eine etwaige Überlastung des Rechners vermieden werden kann; zugleich wird auch eine Erhöhung der Genauigkeit erreicht. In der Zeichnung ist dieses Kammfilter als eine im Takt der Entfernungstore betriebene Tiefpaßfilterbank dargestellt; in der Praxis wird man wiederum eine Realisierung mittels eines Digitalfilters vorziehen, dem darin wiederum ein Analog/Digital-Umsetzer vorzuschalten ist, wie dies auch in Figur 3 dargestellt ist. In entsprechender Weise können in der Schaltungsanordnung nach Fig. 3 auch in die zum zentralen Bordrechner C führenden Ausgangsleitungen g und f (die Entfernungsselektion aufrechterhaltende) Tiefpässe eingefügt sein, um auch dort eine entsprechende Reduktion des Datenflusses herbeizuführen und damit einer etwaigen Überlastung des Bordrechners C entgegenzuwirken und zugleich zu höheren Genauigkeiten zu gelangen; solche Tiefpässe sind in Fig. 3 jedoch nicht mehr im einzelnen dargestellt.

**Patentansprüche**

1. Einrichtung zur Darstellung eines Geländeausschnitts an Bord von Fahrzeugen, insbesondere Luftfahrzeugen (1), bei deren Bewegung gegenüber dem Erdboden, in der eine ihre Strahlung im Azimut scharf bündelnde, einen größeren Elevationswinkelbereich überdeckende Balkenantenne (A) durch Schwenkung im Azimut den zu überschauenden Geländeabschnitt azimutal zeitlich nacheinander abtastet, wobei das Gelände bei jedem Azimutwinkel aus dem durch das Vertikaldiagramm beleuchteten Winkelbereich ein Gemisch von Echosignalen sowohl unterschiedlicher, jeweils der Entfernung des jeweils reflektierenden Geländeelements proportionaler Laufzeit als auch unterschiedlicher, der Beziehung $f_d = f_{dmax\alpha} \cos\epsilon = (2v_{H\alpha}\lambda) . \cos \epsilon$ folgender Dopplerfrequenz $f_d$ liefert, worin $v_{H\alpha}$ die (Luft-)Fahrzeuggeschwindigkeit in Richtung des Azimutschnittes, $\lambda$ die Radarwellenlänge und $\epsilon$ den Aspektwinkel bedeutet, unter dem das betreffende Geländeelement erfaßt wird,

7

und in der bei einer vertikalen Bilddarstellung eines jeden von jeweils mehreren Radarwellenzügen beleuchteten Azimutschnittes die in aufeinanderfolgenden Zeitfenstern (Entfernungstoren) und damit aus aufeinanderfolgenden Entfernungsbereichen (Entfernungstorbereichen) ($R_i$, $R_j$ jeweils empfangenen Echosignale nach ihrer Dopplerfrequenz analysiert werden

und zur Darstellung auf dem Bildschirm (BS) der Lichtpunkt proportional zum jeweiligen Aspektwinkel vertikal ausgelenkt wird, so daß auf ein unter einem bestimmten Aspektwinkel und mit einer bestimmten Amplitude empfangenes Echo hin der dieses Echo mit einer entsprechenden Helligkeit wiedergebende Bildpunkt eine dem Aspektwinkel proportionale Ablenkung hat, <u>dadurch gekennzeichnet</u>, daß die Balkenantenne (A) aus zwei parallel zueinander angeordneten, eine Peilantenne bildenden Empfangsantennenstäben (1, 2) besteht, deren Abstand einige, z. B. fünf, Wellenlängen beträgt,

daß jewils der Gangunterschied (Phasendifferenz) (G) zwischen in den beiden Empfangsantennenstäben (1,2) von ein und demselben Geländeelement (R) empfangenen Echosignalen im Wege einer entfernungstorindividuellen Phasenwinkelsubtraktion ermittelt und gespeichert wird, daß ebenso entfernungstorindividuell eine Dopplerfrequenzbestimmung vorgenommen wird und

daß aus den Gangunterschieden und Dopplerfrequenzen zumindest zweier Entfernungstorbereiche die Bezugsfrequenz

$$f_{max\alpha} = \frac{\sqrt{f^2_{di} + f^2_{dj} - 2 . f_{di} . f_{dj} . \cos((G_i - G_j)/s)}}{\sin((G_i - G_j)/s)}$$

bestimmt wird, worin $f_{di}$ und $f_{dj}$ die in solchen Entfernungstorbereichen ermittelten Dopplerfrequenzen, $G_l$ und $G_j$ die in den betreffenden Entfernungstorbereichen ermittelten Gangunterschiede und s die vom jeweiligen Aspektwinkel $\varepsilon$ * abhängige Gangunterschiedssteilheit bedeuten,

und daß ferner zur Geländedarstellung auf dem Radarbildschirm zumindest in einem Bereich (II) mittlerer Aspektwinkel, d.h. etwa von 15° bis 75°, der Lichtpunkt zumindest angenähert proportional zum zeitlichen Verlauf der Größe

$$\varepsilon_{II} = \arccos \frac{f_d . \sin((G_i - G_j)/s)}{\sqrt{f^2_{di} + f^2_{dj} - 2 . f_{di} . f_{dj} . \cos((G_i - G_j)/s)}}$$

vertikal ausgelenkt wird, worin $f_d$ die gerade ermittelte Dopplerfrequenz bedeutet.

2. Einrichtung nach Anspruch 1, <u>dadurch gekennzeichnet</u>, daß die aus den in den betreffenden Entfernungstorbereichen ($R_i$, $R_j$) ermittelten Gangunterschieden ($G_i$, $G_j$) und Dopplerfrequenzen ($f_{di}$, $f_{dj}$) bestimmte Bezugsfrequenz

$$f_{dmax\alpha} = \frac{\sqrt{f^2_{di} + f^2_{dj} - 2 . f_{di} . f_{dj} . \cos((G_i - G_j)/s)}}{\sin((G_i - G_j)/s)}$$

zur Bestimmung des azimutalen Geschwindigkeitsvektors

$$V_{H\alpha} = \lambda . f_{dmax\alpha}/2$$

ausgenutzt wird.

3. Einrichtung nach Anspruch 2, <u>dadurch gekennzeichnet</u>, daß die aus den in den beiden Entfernungstorbereichen ($R_i$, $R_j$) ermittelten Gangunterschieden ($G_i$, $G_j$) und Dopplerfrequenzen ($f_{di}$, $f_{dj}$) bestimmte Bezugsfrequenz

$$f_{dmax\alpha} = \frac{\sqrt{f^2_{di} + f^2_{dj} - 2 . f_{di} . f_{dj} . \cos((G_i - G_j)/s)}}{\sin((G_i - G_j)/s)}$$

jeweils assoziativ zum jeweiligen Azimutwinkel $\alpha$, bezogen auf die (Luft-)Fahrzeuglängsachse, gespeichert wird und die während eines Azimutschwenks auftretende höchste Bezugsfrequenz zur Bestimmung des horizontalen Geschwindigkeitsvektors

$$v_H = \lambda . f_{dmax\alpha}/2$$

ausgenutzt wird.

4. Einrichtung nach einem der Ansprüche 1 bis 3, <u>dadurch gekennzeichnet</u>, daß die Bezugsfrequenz

$$f_{dmax\alpha} = \frac{\sqrt{f^2_{di} + f^2_{dj} - 2 . f_{di} . f_{dj} . \cos((G_i - G_j)/s)}}{\sin((G_i - G_j)/s)}$$

durch Bestimmung der Gangunterschiede ($G_i$, $G_j$) und Dopplerfrequenzen ($f_{di}$, $f_{dj}$) zweier etwa einer Aspektwinkeldifferenz in der Größenordnung von 30 bis 60° entsprechend weiter auseinanderliegender Entfernungstore ermittelt wird.

5. Einrichtung nach einem der Ansprüche 1 bis 4,

dadurch gekennzeichnet, daß in einem sich an einen unteren, den mittleren Aspektwinkelbereich nach unten abgrenzenden Grenzaspektwinkel von etwa 15 bis 20° anschließenden Bereich (I) kleinerer Aspektwinkel, d.h. von weniger als 15 bis 20°, der Lichtpunkt in jeder Radarpulsperiode zumindest angenähert proportional zum zeitlichen Verlauf der Größe

$$\varepsilon_{II} = \varepsilon_{II/I} - (G - G_{II/I})/s$$

vertikal ausgelenkt wird, worin $\varepsilon_{II/I}$ ein im mittleren Aspektwinkelbereich (II) beliebig gewählter Bezugsaspektwinkel und $G_{II/I}$ der dabei gegebene Gangunterschied sowie s die im Bereich (I) kleiner Aspektwinkel maßgebende Gangunterschiedssteilheit bedeuten.

6. Einrichtung nach Anspruch 5,

dadurch gekennzeichnet, daß der Bezugsaspektwinkel ($\varepsilon_{II/I}$) durch den unteren Grenz-Aspektwinkel gegeben ist, der etwa 15 bis 20° beträgt.

7. Einrichtung nach einem der Ansprüche 1 bis 7,

dadurch gekennzeichnet, daß die Peilantennenebene, d.h. die Ebene, in welcher die beiden Empfangsantennenstäbe (1,2) liegen, gegen die (Luft-)Fahrzeugvertikalachse in Richtung der (Luft-)Fahrzeuglängsachse geneigt ist.

8. Einrichtung nach Anspruch 7,

gekennzeichnet durch eine Neigung in der Größenordnung von 10°.

9. Einrichtung nach einem der Ansprüche 1 bis 8,

dadurch gekennzeichnet, daß die Peilantenne einen zwischen den beiden Empfangsantennenstäben (1,2) liegenden gesonderten Sendeantennenstab aufweist.

**Claims**

1. A device for displaying of a portion of terrain on board of vehicles, in particular aircraft (1) moving in relation to the ground, wherein a linear array antenna (A) sharply focussed in azimuth and covering a large elevation angle range, to successively scan in azimuth the portion of terrain to be surveyed, when pivotted azimuthally.

where, at each azimuth angle, from the angle range illuminated by the vertical polar diagram, the land supplies a mixture of echo signals which differ both in respect of transit time, proportional to the range of the respective reflecting land element, and also in respect of Doppler frequency $f_d$, to obey the equation:

$$f_d = f_{dmax\alpha} \cdot \cos \varepsilon = (2v_{H\alpha}/\lambda) \cdot \cos \varepsilon;$$

where $v_{H\varepsilon}$ is the (air)craft speed in the direction of the azimuth section;,

$\lambda$ is the radar wavelength; and

$\varepsilon$ is the aspect angle at which the land element in question is represented;

and in which, in a vertical pictorial displaying of each azimuth section illuminated by a plurality of radar wave trains, the echo signals of which are each received in consecutive time windows (range gates) and are thus analysed in respect of their Doppler frequency from consecutive range zones (range gate zones) ($R_i$, $R_j$);

and for displaying on the screen (BS) the light point is vertically-deflected in proportion to the respective aspect angle so that in response to an echo received at a specified aspect angle and with a specified amplitude, the image point which reproduces this echo with a corresponding brightness has a deflection proportional to the aspect angle;

characterised in that the linear array antenna (A) consists of two receiving antenna rods (1,2) arranged in parallel to one another and which form a DF(direction finding) -antenna and which are spaced by a few wavelengths, for example five;

that each phase difference (G) between echo signals received by the two receiving antenna rods (1,2) from each one land element (R) are determined by means of phase angle subtraction, carried out individually in respect of each range gate, and is stored;

that the Doppler frequency is determined, individually in respect of each range gate;

and that from the phase differences and Doppler frequencies of at least two range gate zones the reference frequency

$$f_{dmax\alpha} = \frac{\sqrt{f^2_{di} + f^2_{dj} - 2.f_{di}.f_{dj} \cdot \cos [(G_i - G_j)/s]}}{\sin [(G_i - G_j)/s]}$$

is determined, where:- $f_{di}$ and $f_{dj}$ are the Doppler frequencies established in such range gate zones,

$G_i$ and $G_j$ are the phase differences established in the respective range gate zones; and
s is the phase difference gradient dependent upon the respective aspect angle $\varepsilon^*$;
and that moreover in order that the land may be represented on the radar screen, at least in a middle aspect angle zone (II), i.e. from approximately 15° to 75°, the light point is vertically-deflected at least in approximate proportional to the time curve of the quantity:

$$\varepsilon_{II} = \text{arc cos} \quad \frac{f_d \cdot \sin [(G_i - G_j)/s]}{\sqrt{f^2_{di} + f^2_{dj} - 2 \cdot f_{di} \cdot f_{dj} \cdot \cos [(G_i - G_j)/s]}}$$

where $f_d$ is the Doppler frequency which has just been determined.

2. A device as claimed in Claim 1, characterised in that the reference frequency

$$f_{dmax\alpha} = \frac{\sqrt{f^2_{di} + f^2_{dj} - 2.f_{di} \cdot f_{dj} \cdot \cos [(G_i - G_j)/s]}}{\sin ((G_i - G_j)/s]}$$

determined from the phase differences ($G_i$, $G_j$) and Doppler frequencies ($f_{di}$, $f_{dj}$) established in the range gate zones ($R_i$, $R_j$) in question is used to determine the azimuthal speed vector

$$V_{H\alpha} = \lambda \cdot f_{dmax\alpha}/2$$

3. A device as claimed in Claim 2, characterised in that the reference frequency

$$f_{dmax\alpha} = \frac{\sqrt{f^2_{di} + f^2_{dj} - 2.f_{di}.f_{dj} \cdot \cos ((G_i - G_j s)]}}{\sin [(G_i - G_j)/s]}$$

determined from the phase differences ($G_i$, $G_j$) and Doppler frequencies ($f_{di}$, $f_{dj}$), established in the two range gate zones ($R_i$, $R_j$) is in each case stored associatively to the respective azimuth angle $\alpha$ relative to the (air)craft longitudinal axis and the maximum reference frequency occurring during an azimuthal pivot movement is used to determine the horizontal speed vector

$$V_H = \lambda \cdot f_{dmax\alpha}/2.$$

4. A device as claimed in one of Claims 1 to 3, characterised in that the reference frequency

$$f_{dmax\alpha} = \frac{\sqrt{f^2_{di} + f^2_{dj} - 2.f_{di}.f_{dj} \cdot \cos [(G_i - G_j)/s]}}{\sin ((G_i - G_j)/s]}$$

is determined by establishing the phase differences ($G_i$, $G_j$) and Doppler frequencies ($f_{di}$, $f_{dj}$) of two range gates which are spaced further apart from one another approximately in accordance with an aspect angle difference in the order of 30 to 60°.

5. A device as claimed in one of Claims 1 to 4, characterised in that in a smaller aspect angle zone (I), of i.e. less than 15 to 20°, which adjoins a lower limit aspect angle of approximately 15 to 20° which forms the lower limit of the middle aspect angle zone, the light point is vertically-deflected in each radar pulse period at least approximately in proportion to the time curve of the quantity:

$$\varepsilon_I = \varepsilon_{II/I} - (G - G_{II/I})/s;$$

wherein $\varepsilon_{II/I}$ is a reference aspect angle arbitrarily selected in the middle aspect angle zone (II);
$G_{II/I}$ is the given phase difference; and
s is the governing phase difference gradient in the small aspect angle zone (I).

6. A device as claimed in Claim 5, characterised in that the reference aspect angle ($\varepsilon_{II/I}$) is governed by the lower limit aspect angle, approximately 15 to 20°.

7. A device as claimed in one of Claims 1 to 7, characterised in that the DF-antenna plane, i.e. the plane in which the two receiving antenna rods (1,2) are located, is inclined relative to the air(craft) vertical axis in the direction of the (air)craft longitudinal axis.

8. A device as claimed in Claim 7, characterised by an inclination in the order of 10°.

9. A device as claimed in one of Claims 1 to 8, characterised in that the DF-antenna is provided with a separate transmitting antenna rod arranged between the two receiving antenna rods (1,2).

**Revendications**

1. Dispositif pour représenter une parcelle de terrain à bord de véhicules, notamment de véhicules aériens (1), lors de leur déplacement par rapport au sol, et dans lequel une antenne formée de barreaux (K), qui

# 0 076 877

focalise son rayonnement selon un pinceau serré en azimut et couvre une plage angulaire assez étendue en élévation, explore successivement dans le temps, selon un mode azimutal, par pivotement en azimut, la parcelle de terrain devant être explorée,

le terrain fournissant, pour chaque angle azimutal, à partir de la plage angulaire irradiée par le diagramme vertical, un mélange de signaux d'échos possédant aussi bien des temps de transit différents, proportionnels respectivement à la distance de l'élément de terrain réalisant respectivement une réflexion, que des fréquences Doppler ($f_d$) différentes, répondant à la relation $f_d = f_{dmax\alpha}.\cos \varepsilon = (2v_{H\alpha}/\lambda) \cdot \cos \varepsilon$, où $v_{H\alpha}$ désigne la vitesse du véhicule (aérien) en direction de la section azimutale, $\lambda$ désigne la longueur d'onde du radar et $\varepsilon$ l'angle d'aspect, sous lequel l'élément de terrain considéré est détecté,

et dans lequel, dans le cas d'une représentation imagée verticale de chaque section azimutale éclairée par plusieurs trains d'ondes respectifs du radar, les fenêtres temporelles successives (portes de distances et par conséquent les signaux d'écho respectivement reçus à partir de plages successives de distances (plages de portes de distances) ($R_i$, $R_j$) sont analysés en ce qui concerne leur fréquence Doppler, et pour la représentation sur l'écran (BS), le point lumineux est dévié verticalement proportionnellement à l'angle d'aspect respectif de sorte que lors de l'apparition d'un écho reçu sous un angle d'aspect déterminé et avec une amplitude déterminée, le point image reproduisant cet écho avec une luminosité correspondante possède une déviation proportionnelle à l'angle d'aspect,

caractérisé par le fait

que l'antenne à barreaux (A) est constituée par deux barreaux d'antenne réceptrice (1,2) qui sont parallèles entre eux et forment une antenne radiogoniométrique et dont l'écartement est égal à quelques longueurs d'onde, par exemple à cinq longueurs d'onde,

qu'on détermine la différence respective de marche (différence de phase) (G) entre les signaux d'échos reçus dans les deux barreaux (1,2) de l'antenne réceptrice à partir d'un même élément de terrain (R) au moyen d'une soustraction des angles de phase, prévue pour chaque porte de distance, et qu'on la mémorise,

qu'on réalise également une détermination de la fréquence Doppler pour chaque porte de distance, et

qu'à partir des différences de marche et des fréquences Doppler d'au moins deux plages de portes de distance, on détermine la fréquence de référence

$$f_{dmax\alpha} = \frac{\sqrt{f^2_{di} + f^2_{dj} - 2.f_{di}.f_{dj} \cdot \cos((G_i\text{-}G_j)/s)}}{\sin((G_i\text{-}G_j)/s)}$$

où $f_{di}$ et $f_{dj}$ désignent les fréquences Doppler déterminées dans de telles plages de portes de distances, $G_i$ et $G_j$ désignent les différences de marche déterminées dans les plages considérées de portes de distances et s désigne la pente de différence de marche, qui dépend de l'angle d'aspect respectif $\varepsilon^*$, et

qu'en outre pour la représentation du terrain sur l'écran radar, on fait dévier verticalement le point lumineux au moins d'une manière approximativement proportionnelle à la variation dans le temps de la grandeur

$$\varepsilon_{II} = \text{arc} \cos \frac{f_d.\sin((G_i\text{-}G_j)/s}{\sqrt{f^2_{di} + f^2_{dj} - 2.f_{di}.f_{dj}.\cos((G_i\text{-}G_j)/s}}$$

au moins dans une zone (II) d'angles d'aspects moyens, par exemple entre environ 15° et 75°, $f_d$ désignant la fréquence Doppler précisément déterminée.

2. Dispositif suivant la revendication 1, caractérisé par le fait qu'on utilise la fréquence de référence, déterminée à partir des différences de marche ($G_i$,$G_j$) et des fréquences Doppler ($f_{di}$, $f_{dj}$), déterminées dans les plages considérées des portes de distances ($R_i$,$R_j$),

$$f_{dmax\alpha} = \frac{\sqrt{f^2_{di} + f^2_{dj} - 2.f_{di}.f_{dj}.\cos((G_i\text{-}G_j)/s)}}{\sin ((G_i - G_j)/s)}$$

pour déterminer le vecteur vitesse azimutal

$$V_{H\alpha} = \lambda .f_{dmax\alpha}/2.$$

3. Dispositif suivant la revendication 2, caractérisé par le fait qu'on mémorise la fréquence de référence, déterminée à partir des différences de marche ($G_i$,$G_j$) et des fréquences Doppler ($f_{di}$, $f_{dj}$), déterminées dans les plages considérées des portes de distances ($R_i$,$R_j$),

$$f_{dmax\alpha} = \frac{\sqrt{f^2_{di} + f^2_{dj} - 2.f_{di}.f_{dj}.\cos((G_i\text{-}G_j.)/s)}}{\sin((G_i - G_j)/s)}$$

respectivement en association à l'angle azimutal respectif $\varepsilon$, rapporté à l'axe longitudinal du véhicule (aérien), et qu'on utilise la fréquence de référence maximale, qui apparaît pendant un balayage en azimut, pour déterminer le vecteur de vitesse horizontal

$$V_{H\alpha} = \lambda .f_{dmax\alpha}/2.$$

4. Dispositif suivant l'une des revendications 1 à 3, caractérisé par le fait que la fréquence de référence

11

**0 076 877**

$$f_{dmax\alpha} = \frac{\sqrt{f^2_{di} + f^2_{dj} - 2.f_{di}.f_{dj} . \cos((G_i-G_j)/s)}}{\sin((G_i-G_j)/s)}$$

est déterminée au moyen de la détermination des différences de marche $(G_i,G_j)$ et des fréquences Doppler $(f_{di},f_{dj})$ de deux portes de distances plus écartées l'une de l'autre d'une manière correspondant approximativement à une différence d'angles d'aspect de l'ordre de 30 à 60°C.

5. Dispositif suivant l'une des revendications 1 à 4, caractérisé par le fait que dans une plage (I) qui se raccorde à une plage inférieure d'angles d'aspect d'environ 15 à 20° limitant vers le bas la plage médiane des angles d'aspect , et qui inclut des angles d'aspects plus petits, par exemple allant de moins de 15 jusqu'à 20·, le point lumineux est dévié verticalement pendant chaque période d'impulsion du radar au moins d'une manière approximativement proportionnelle à la variation dans le temps de la grandeur

$$\varepsilon_l = \varepsilon_{II/l} - (G - G_{II/l}/s$$

$\varepsilon_{II/l}$ désignant un angle d'aspect de reference choisi d'une manière quelconque dans la plage médiane (II) des angles d'aspect, et $G_{II/l}$ désignant la différence de marche donnée et s la pente des différences de marche, qui est déterminante dans la plage (I) de petits angles d'aspect.

6. Dispositif suivant la revendication 5, caractérisé par le fait que l'angle d'aspect de référence $(\varepsilon_{II/l})$ est déterminé par l'angle d'aspect limite inférieur qui est compris entre environ 15 et 20°.

7. Dispositif suivant l'une des revendications 1 à 7, caractérisé par le fait que le plan de l'antenne radiogonométrique, c'est-à-dire le plan, dans lequel les deux barreaux (1,2) de l'antenne réceptrice sont situés, est incliné par rapport à l'axe vertical du véhicule (aérien) en direction de l'axe longitudinal du véhicule (aérien).

8. Dispositif suivant la revendication 7, caractérisé par une inclinaison de l'ordre de 10°.

9. Dispositif suivant l'une des revendications 1 à 8, caractérisé par le fait que l'antenne radiogoniométrique possède un barreau d'antenne émettrice séparé situé entre les deux barreaux (1,2) de l'antenne réceptrice.

12

FIG 1

FIG 1a

FIG 3

0 076 877

RF/ZF

ZF/V x1 | A/D x1 / x2

ZF/V y1 | A/D y1 / y2

$P$

$( \text{arctg} \frac{x1}{y1} - \text{arc tg} \frac{x2}{y2} )$ g

$\underline{C}$

(Zentral-rechner)

BS

bs

nd

Navigations-daten

D

B

G

Z
G 0° | φ | 90°

+

A/D h ETA

A/D

ZF/V | A/D

EDFB : f

ZF/V | A/D

EDFB : f

EDFB

G

1440°
1080°
720°
360°

FIG 2

10° 30° 50° 70°  ε*